# EUROPEAN PATENT APPLICATION

(11) **EP 3 974 921 A1**
(43) Date of publication of application: **30.03.2022**
(21) Application number: 20198013.3
(22) Date of filing: 24.09.2020
(51) Int. Cl.: G05B 19/042, G06Q 10/06

(54) **INTEGRATED DEVELOPMENT MODULE AND METHOD FOR ENGINEERING AUTOMATION SYSTEMS IN AN INDUSTRIAL AUTOMATION ENVIRONMENT**

(71) Applicant: Siemens Aktiengesellschaft, 80333 München (DE)
(72) Inventor: Götz, Jan, 91054 Buckenhof (DE); Berger, Daniel, 90443 Nürnberg (DE); Botero Halblaub, Andrés, 85614 Kirchseeon (DE)

(57) **Abstract**

Integrated development module (504) and method for engineering automation systems in an industrial automation environment are disclosed. The method comprising: determining at least one intermediate artifact (300) generated from at least one of an automation project (402, 523) executed by the automation software, runtime data and an industry standard associated with the industrial automation environment (510); determining skills for the automation project (402, 523) based on the intermediate artifact (300) using a skill model generated based on one or more dependencies in the industrial automation environment (510), wherein the dependencies are determined from a plurality of automation projects executed by the at least one automation software; and enabling engineering of the automation systems (512-516) based on the skills (450, 524) determined for the automation project (402, 523) .

## Description

The present invention relates to Engineering Automation Systems. Particularly, the present invention provides an integrated development module and method for engineering automation systems in an industrial automation environment.

In several applications of Industry 4.0 and digitalization it may be necessary to describe skills in automation projects executed using automation system. The skills mostly consist of single software components and interfaces which may be enriched with semantics. In many cases enrichment may also be required for existing programs to make them reusable. The process of adding description may require a detailed understanding of the existing source code and interfaces. A programmer may need to describe these skills manually. In many cases, the knowledge associated with the automation projects may no longer be available. In such a case the automation project may need to be analyzed by a programmer prior to extending for new use of skills.

Typically, the generation of skills and analysis of the automation projects are mainly through manual analysis of the program code and a manual description of the skills. Manual effort is costly and time-consuming. Accordingly, the methods and development environments to engineer automation projects and automation systems may benefit from improvements.

The object of the present invention is to provide a method of engineering the automation systems and the automation projects with minimal manual effort. In addition, the object of the present invention is to automatically generates skills for automation projects that may or may not be skill-based.

In an example, the object of the present invention is achieved by a method for engineering automation systems in an industrial automation environment, wherein the automation systems are engineered using at least one automation software, the method comprising: determining at least one intermediate artifact generated from at least one of an automation project executed by the automation software, runtime data and an industry standard associated with the industrial automation environment; determining skills for the automation project based on the intermediate artifact using a skill model generated based on one or more dependencies in the industrial automation environment, wherein the dependencies are determined from a plurality of automation projects executed by the at least one automation software; and enabling engineering of the automation systems based on the skills determined for the automation project.

In another example, the object is achieved by an integrated development module of an automation software to engineer automation systems in an industrial automation environment, the integrated development module configured to cause a processing unit to execute at least one of the steps according to method disclosed herein.

A further example may include a non-transitory computer readable medium encoded with executable instructions (such as a software component on a storage device) that when executed, causes a processor to carry out this described method.

The present invention advantageously proposes a method and an integrated development module/environment for the automated processing of existing automation projects or runtime data to determine intermediate artifacts and through the use of the existing relations and to extract skills. The present invention goes beyond determination of intermediate artifacts to generate the skills which reduce the effort and time required for an engineer to orchestrate skills for the automation projects and the automation systems. Therefore, present invention advantageous enables error free orchestration of skills for the automation systems based on the automation project. This may be enable avoiding prolonged delays in commissioning and reconfiguration of the automation systems and enables reusing the source code.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein, the automation systems may be control devices, sensors, actuators that include a physical device and a digital model that can be used to configure and control the physical device. For example, Computer Numerical Control (CNC) machines, automation systems in an industrial production facility, motors, generators and the like. The automation systems can also be referred to a as cyber-physical systems/devices.

The automation systems may be part of an industrial automation environment or an industrial facility. As used herein "industrial facility" or "industrial automation environment" refers to a facility for manufacture/production/sorting may be semi or completely automated. For example, manufacturing automation environment, laboratory automation environment, building automation environment and the like.

The method includes determining at least one intermediate artifact generated from at least one of an automation project executed by the automation software, runtime data and an industry standard associated with the industrial automation environment.

Automation project refers to project that is used to engineer, coordinate or orchestrate operation of the automation systems. The automation project may be a legacy project that is not defined based on skills or may be a skill-based automation projection. Based on the automation project actions/skills/functions of the automation systems can be determined and implemented. By implementing actions/skills/functions of the automation systems one or more operations in the industrial automation environment can be performed. Typically, the automation project is executed on proprietary/open source automation software.

Accordingly, "automation software" refers to software used in the industrial automation environment to integrate multiple operations such as commissioning, configuring, and controlling the automation systems through the execution of one or more automation projects.

In an embodiment, the operation in the industrial automation environment may include the operation of a robotic arm (automation system) to insert a component into a paint liquid through a "pick-and-place" skill. The automation project may be orchestrated to perform the operation. For orchestration, the automation project may not need to run on a separate hardware. In an embodiment, an Integrated Development Environment (IDE) may be distribute orchestration of the automation projects in the automation environment. Integrated development module is configured to generate an Integrated Development Environment (IDE), wherein the IDE is accessed by a Graphical User Interface (GUI) of an engineering system. The integrated development module may be hosted on at least one of the engineering systems, an edge computing platform in the industrial automation environment and a cloud computing platform.

As used herein "intermediate artifacts" refer to software artifacts or by-products that are created from existing software components such as from source code of the automation project. The intermediate artifacts include any artifacts associated with the automation project or relevant to it such as automation software architecture sketches. For example, intermediate artifacts include data models, diagrams, setup scripts, call-graphs, state-machines are created from existing software components, runtime data or industry standards such as OPC Unified Architecture (OPC UA).

The intermediate artifact advantageously improves the skill creation due to their high objective analysis value, in particular compared with a direct manual analysis of the automation project. The determination of the intermediate artifact enables determination and extraction of dependencies between components of the automation systems. The dependencies may be between hardware components, between software components and between hardware and software components. By extracting the dependencies, it is easier to analyze the operations and functionality of the automation systems in relation to an automation project.

The method may include analyzing the determined intermediate artifact based on training intermediate artifacts. As used herein the training intermediate artifacts are the artifacts that are associated with a plurality of automation projects. The training artifacts are already analyzed to determine the dependencies in the industrial automation environment. The method may include comparing at least one of the call-graphs and the state-machines for the automation project with the call-graphs and the state-machines for the plurality of automation projects using the skill model and the skill database, wherein comparing comprises determining of common attributes based on similarity matching of the intermediate artifacts with the call-graphs and the state-machines for the plurality of automation projects. The comparison enables determination of the skills associated with the automation project.

As used herein, "plurality of automation projects" refers to skill-based projects and/or an unskilled-legacy projects that have been executed in the industrial automation environment using one of more automation software.

The method includes determining skills for the automation project based on the intermediate artifact using a skill model generated based on one or more dependencies in the industrial automation environment, wherein the dependencies are determined from a plurality of automation projects executed by the at least one automation software. In an embodiment, the method may accordingly include determining the skills for the automation project based on the comparison. As used herein, the dependencies refer to interaction between hardware components, between software components and between hardware and software components of the automation systems in the industrial automation environment for the execution of the plurality of automation projects. As indicated earlier, the dependencies can be extracted based on artifacts such as call-graphs, state machine diagrams, et cetera.

As used herein "industry standard" refers to a standard associated with the industrial automation environment. The industry standard provides definitions of concepts and relations between the automation systems operating within the industrial automation environment to ensure interoperability and connectivity. For example, IEC 61512 [13], OPC UA for PackML Common Object Model Companion Specification or OPC UA Companion Specifications or Namur Module Type Package (MTP). The method may include automatically assigning the industry-skills determined from the industry standard to the automation project, wherein automatically assigning comprises fitting the industry-skills to the automation project based on the comparison with the plurality of automation projects. In an embodiment, the industry-skills determined from the industry standard are classified as standard skills in the skill database. The method may also include fitting the industry-skills to the automation project based on the comparison with the plurality of automation projects using the skill model. The present invention advantageously reuses existing industry-skills and fits it to the automation project using the skin model.

As used herein, "skill model" refers to a model that receives the intermediate artifact and determines the skills associated using on the training artifacts and the dependencies determined therefrom. To generate the skill model the plurality of automation projects may need to be analyzed. Such an analysis may be performed through distributed computing or at a server executing the skill model/hosting the skill database. The method may include generating at least one of call-graphs and state-machines from the source code of the plurality of the automation projects, determining the call-graphs and the state-machines from the industry standard; and analyzing the plurality of automation projects based on the call-graphs and the state-machines to determine the system-dependencies, the component-dependencies, the hardware-dependencies and the software-dependencies.

As used herein "system-dependencies" refer to the dependencies between the automation systems in the industrial automation environment. The dependencies between the automation systems may be between hardware components or software components or a combination thereof. The "component-dependencies" refers to dependencies between hardware components and software components of an automation system.

The method may include determining at least one of the system-dependencies, the component-dependencies in an autonomous system, the hardware-dependencies and the software-dependencies in the industrial automation environment based on source code of the plurality of automation projects and runtime data, wherein the plurality of automation projects comprises at least one of a skill-based project and an unskilled-legacy project. The method may further include generating the skill model based the dependencies in the industrial automation environment, wherein the dependencies include the system-dependencies, the component-dependencies, the hardware-dependencies and the software-dependencies.

The skill model may be used in at least two stages during the implementation of the present invention. For example, the skill model may be generated and trained using the training artifacts at a training stage of the present invention. During runtime, the skill model is used to determine the skills associated with the intermediate artifact. In an embodiment, the method may include retraining the skill model based on modifications to the intermediate artifact.

The method may include displaying the intermediate artifacts to enable an automation engineer to validate the determined intermediate artifacts associated with the automation project.
The validation by the automation engineer may be used to reinforce or retrain the skill model. Accordingly, the method may include updating the skill model based on the validation from the automation engineer, wherein the skill model comprises a similarity matching algorithm configured to cause a processing unit to determine the common attributes.

For example, the skill model includes a pattern matching algorithm may, e.g., be based on a Hidden Markov Model (HMM). The HMM learns the state-machines and the corresponding transitions as links or sequences of program building blocks, hardware configurations, HMIs and technology objects of the plurality of automation projects (i.e. training artifacts).

The learned state-machines and the corresponding transitions are added to the skill database and compared with the intermediate artifact to determine the skills. In an embodiment, the training artifacts are grouped into skills in the skill database. The skill model has the advantage that it may serve as a very good basis for an "auto completion" or a recommender-function in an engineering system to automatically determine the skills for the automation project or based on the runtime data or based on the industry standard involved.

The grouping of the skills in the skill database may be in the form of clusters or in hierarchy. The clusters/hierarchy may be used to indicate capture the dependencies when executing the plurality of automation projects. Accordingly, the method may include generating a skill clusters by integrating the skills in according to a descending level of interaction between the skills to execute the plurality of automation projects. Therefore, an automation engineer may advantageously visualize the interaction between the components of the automation system and modifying them suitably.

The method may include generating a skill database by mapping the skills and the skill cluster to the automation systems and the plurality automation projects; and updating the skill database based on operation of the automation software. In an embodiment, the method may include updating the skill database with at least one new mapping between the skills, the skill cluster, the automation systems and the plurality of automation projects. For example, the dependencies used to generate the skills and identify the skill cluster are mapped on to associated automation systems for each of the plurality of automation projects.

Further, the skill database enables the skills to be integrated across multiple automation levels in the industrial automation environment. Accordingly, the method may include that integrating the skills and the skill hierarchy in at least one automation layer of the industrial automation environment based on an automation level, wherein the automation level includes one of field level, control level, supervisory level, planning level, enterprise level and an inter-enterprise cloud level. For example, pattern matching and pattern clustering are used to generate the skill cluster/hierarchy displaying "skills of skills" and thus allowing for an integration in the industrial automation layer in various levels of abstraction. The pattern matching and clustering may be implemented using the skill model.

The method may include displaying the skills determined for the automation project to facilitate the automation engineer to engineer and/or orchestrate the skills for the automation systems based on the displayed skills. The method includes enabling engineering of the automation systems based on the skills determined for the automation project. As used herein engineering the automation systems includes commissioning of automation systems, reconfiguring the automation systems, modifying operating parameters of the automation systems. Further, orchestration of the skills may include selecting one or more skills to execute at least one operation in the industrial automation environment. For example, the operation may be moving from location 1 to location 2.

The aforementioned features advantageously automate processing of the automation project without additional efforts irrespective of whether the automation project is skill-based or not. Accordingly, existing automation projects may be reused for Industry 4.0 applications. The automation is achieved by the automatic creation of the skills, and thereby requires less time and money. Further, the present invention through an interactive IDE supports a user/automation engineer when the skill cannot be created fully automatically and learns to enable fully automatic creation of skills in the future. The IDE may also be used (e.g. using a GUI) to allow the user to better understand the intermediate artifacts and the relations of the components. Accordingly, the present invention provides an architecture of skill automation.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates a schematic representation of dependencies in an automation system, according to an embodiment of the present invention;
- Fig. 2: illustrates a schematic representation of a skill definition for an automation project, according to an embodiment of the present invention;
- Fig. 3: illustrates a schematic representation of intermediate artifacts for an automation project, according to an embodiment of the present invention;
- Fig. 4: illustrates a schematic representation of generation of skills using the intermediate artifacts, according to an embodiment of the present invention;
- Fig. 5: illustrates a system for engineering automation systems in an industrial automation environment, according to an embodiment of the present invention; and
- Fig. 6: illustrates a method for engineering automation systems in an industrial automation environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

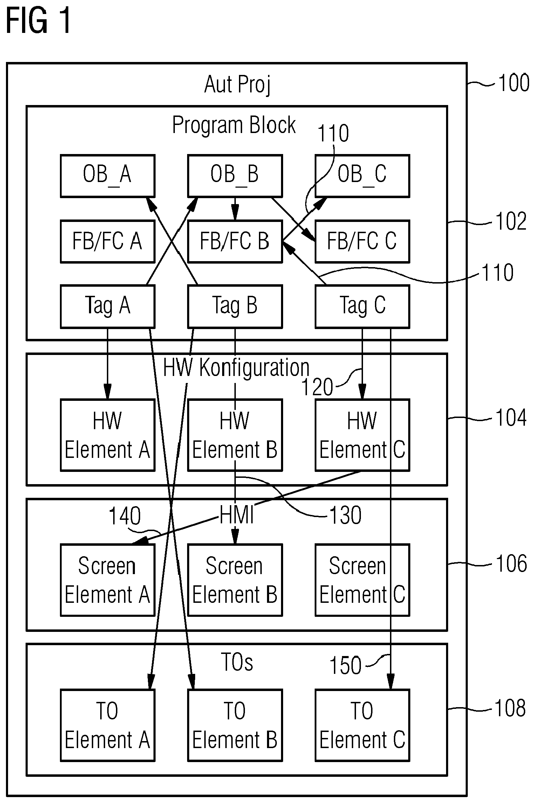

Fig. 1 illustrates a schematic representation of dependencies in an automation system, according to an embodiment of the present invention. In Fig. 1, the schematic representation is for an automation project 100. The automation project 100 includes various blocks 102-108 such as program building blocks 102, hardware component configuration 104, Human Machine Interface (HMI) elements 106, technology objects 108. The blocks 102-108 may be generated using an engineering system that is used to engineer the automation system or the industrial automation environment.

The blocks 102-108 connected to each other indicating the dependencies. For example, software dependencies 110, 150 is the dependency between the program building blocks 102 or between the program building blocks 102 and the technology objects 108 in other words software components of the automation system. As shown, the software dependency 110 is between program block 'Tag C' and 'FB/FC B'. In another example, component dependencies 120, 130 and 140 is the dependency between software and hardware components 120, dependency between hardware components and HMI 130, 140. The dependencies 110-150 are merely illustrative in nature and may change during runtime or based on the automation project.

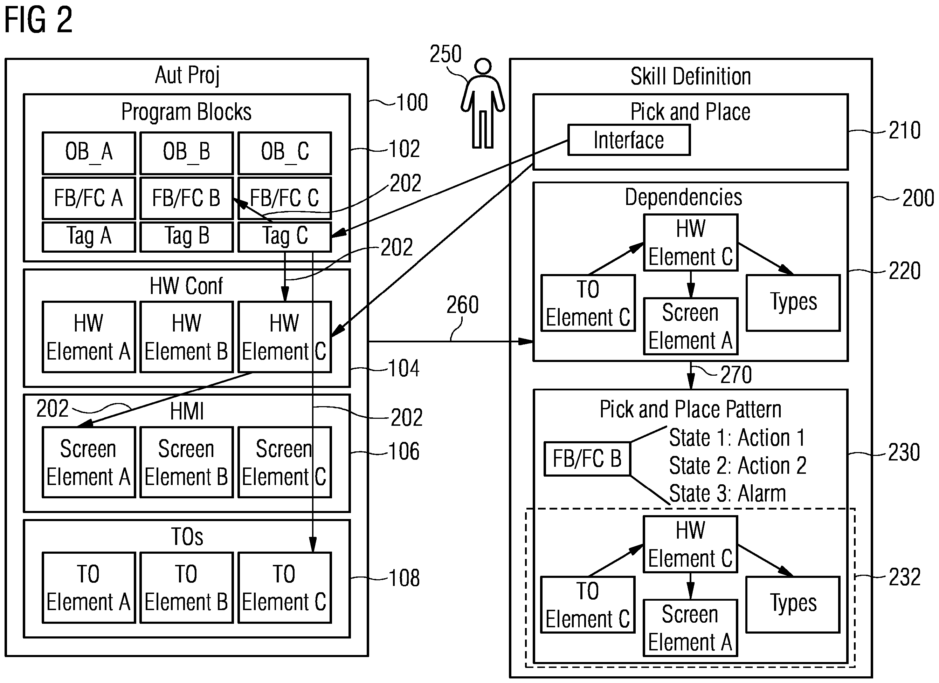

Fig. 2 illustrates a schematic representation a skill definition 200 for the automation project 100, according to an embodiment of the present invention. The skill definition 200 includes an interface description 210 referencing to variables in the automation project 100, dependencies 220 for completing a described task of the automation project 100, and a skill description 230.

In an embodiment, the dependencies 110-150 are automatically extracted by the engineering system to generate the skill definition 200. In another embodiment, the dependencies 110-1150 of the automation project 100 are manually selected by a user of the engineering system through a Graphical User Interface (GUI) and extracted for the skill definition 200.

The extracted dependencies 110-150 may be analyzed by a skill model based on links 202, analysis of source code of the automation project 100, analysis of call-graphs generated from the source code or from runtime data, and internal state-machines. The state-machines are used to analyze the statuses and the links 202. The state-machines advantageously have a high recognition value, are easy to analyze and can be generated from the source code.

In addition to analyzing the automation project 100 and similar such projects executed in the automation environment, existing industry standards may be analyzed to improve the skill definition 200. Such standards may for example be the OPC UA Companion Specifications or Namur Module Type Package (MTP). The industry standards describe data types and variables, and also the state-machines in detail for example "OPC Unified Architecture for PackML Common Object Model Companion Specification". Therefore, the industry standards may directly be used to train the skill model to generate the skill definition 200.

In an embodiment, generation of the skill definition 200 may be done only in a training stage when the skill model is generated and trained as described hereinabove. Accordingly, the state-machines, the call-graphs generated from the automation project 100 and the industry standard may be referred to as training artifacts. Further, the generation of the skill definition 200 may be repeated to generate a skill database for the skills. In another embodiment, generation of the skill definition 200 may be repeated later to improve the quality of the skill database. The updation of the skill definition 200 and the skill database may be based on runtime data generated during operation of the automation software and/or interaction between an automation engineer and the automation software. In an embodiment, the skill definitions 200 are stored in the skill database in clusters or hierarchies. An automation engineer may be supported during the generation of skills with a visualization of the skill cluster/hierarchy to enable engineering of the automation systems and the industrial automation environment.

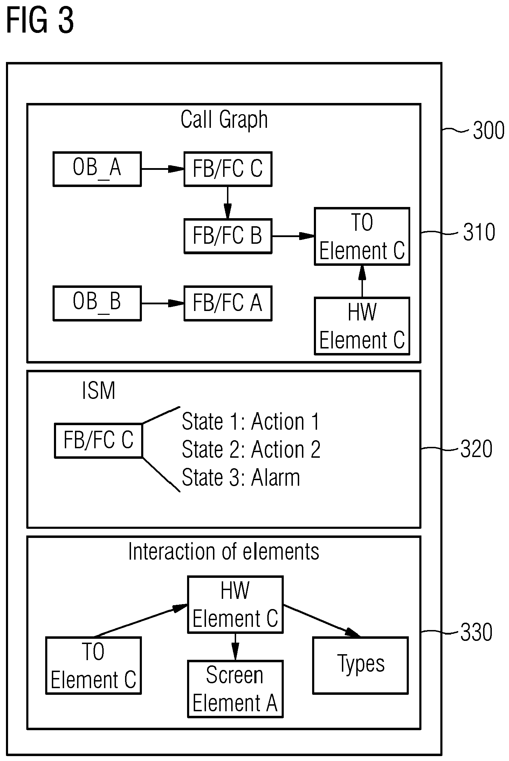

Fig. 3 illustrates a schematic representation of intermediate artifacts 300 for an automation project, according to an embodiment of the present invention. The automation project used to engineer the automation systems is analyzed to determine the intermediate artifacts 300. As illustrated hereinafter, the determination of intermediate artifacts 300 support skill determination. As shown in Fig. 3, the intermediate artifacts 300 may be for example, call-graphs 310, internal state-machines 320 are generated from the automation project or from runtime data and component dependencies 330.

Illustrated hereinabove is a method of automatically extracting skills from existing automation projects or to support the user during the skill extraction. The method is enabled by a skill model that may be implemented as a Pattern Matching algorithm which is trained on links 202 of the elements and components of the automation software (also the automation project 100 when executed on the automation software). Herein, not only visible components dependencies are included, but also the intermediate artifacts 300 generated from the components are included.

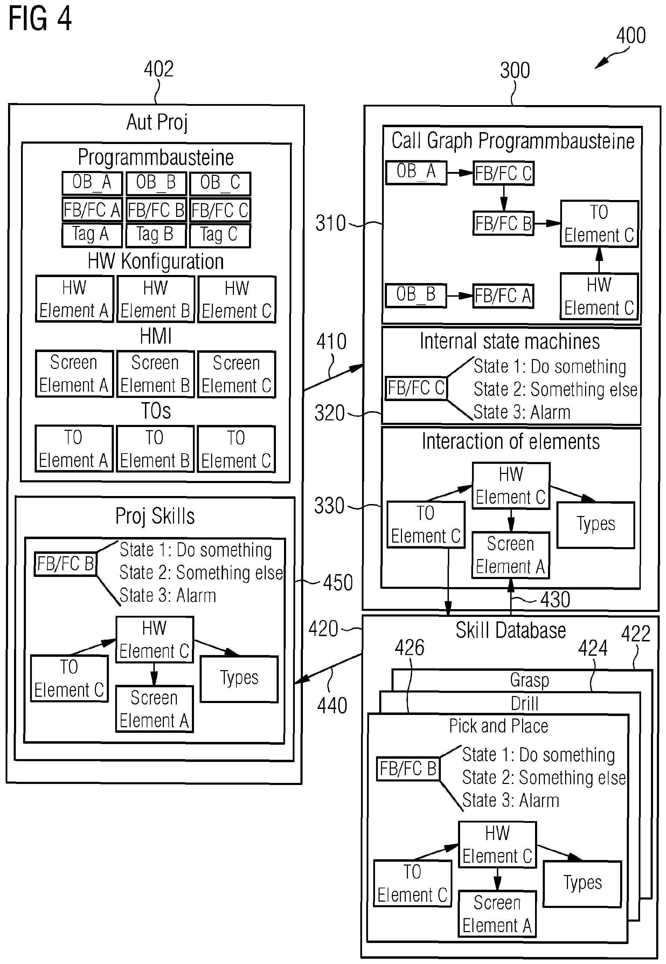

Once the skill model is trained it is used to determine skills for a new automation project. Fig. 4 illustrates a schematic representation of generation of skills 450 using intermediate artifacts 300, according to an embodiment of the present invention.

In an embodiment, the trained skill model analyses the automation project 402 and the runtime data to determine the intermediate artifacts 300 as indicated by arrow 410. In another embodiment, the trained skill model receives the intermediate artifacts 300 and analyzes the intermediate artifacts 300 based on call-graphs 310, internal state-machines 320 and component dependencies 330. Accordingly, the skill model maps intermediate artifacts 300 to skills stored in the skill database 420.

As shown in Fig. 4, the skill database 420 includes the skill clusters 422, 424 and 426. For example, the skill clusters 422-426 are identified based on a skill identifier such as grasp skill 422, drill skill 424 and pick & place skill 426. In an embodiment, the skill model is used to generate the skill clusters 422-426. Accordingly, the skill model may be implemented as combination of pattern matching and pattern clustering algorithms. Further, the skill model enables displaying interactions between the skill cluster 422-426 based on order of execution or hierarchy, etc. Accordingly, the skill database 420 allows for integration of the skill clusters 422-426 in various levels of automation within the industrial automation environment.

The trained skill model may automatically create the skills 450 whereby the automation software is updated with the skills 450 as indicated by arrow 440. In some embodiments, the skill model may not be able to map the intermediate artifacts 300 to the skills, in such cases, the skill model is configured to fit the skills generated based on inputs from the industry standard. In an embodiment, the skill model may perform a reverse operation of starting from the industry standard and fit the skills based on the training artifacts generated from the automation project 100 in Fig. 2.

The skills 450 are generated comparing the call-graphs and the state-machines for the automation project 402 with the call-graphs and the state-machines for the plurality of automation projects using the skill model and the skill database 420. The skill model is trained with the skills stored in the skill database 420. The skills 422-426 are stored in the skill database 420 during the learning or the training stage of the skill model. In an embodiment, skill model determines of common attributes based on similarity matching of the intermediate artifacts with the call-graphs and the state-machines for the plurality of automation projects. The call-graphs and the state-machines for the plurality of automation projects may also be stored in the skill database 420 and clustered according to skills 422-426. The skills for the automation project 402 are determined based on the comparison.

The generated skills 450 may also be displayed as recommendations to the automation engineer. If the automation engineer selects one of the skills 450, the selection will be used to reinforce the training of the skill model. Additionally, intermediate artifacts 300 may be visualized and be presented to the automation engineer to support generation of the skill 450.

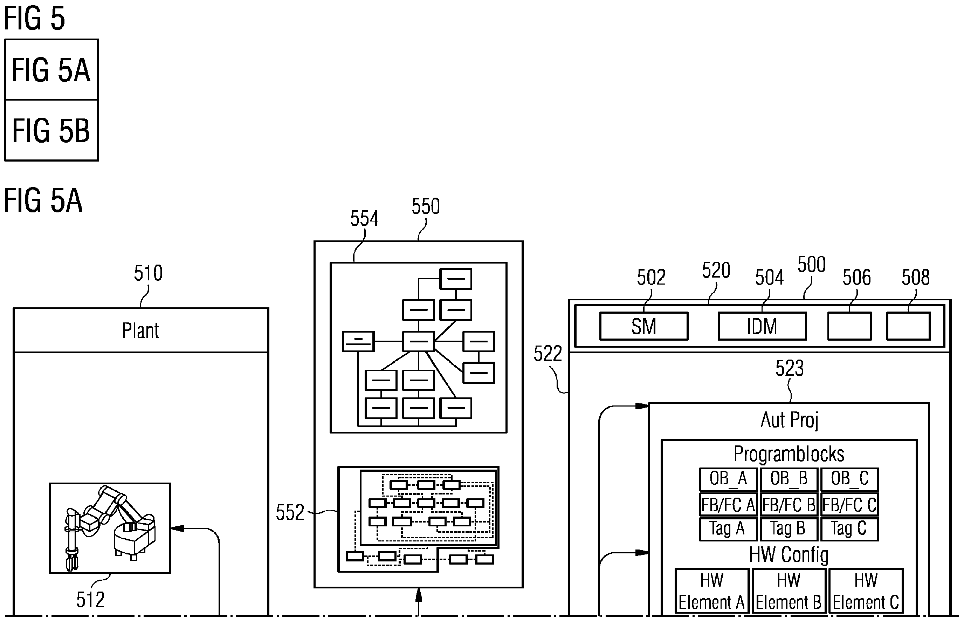

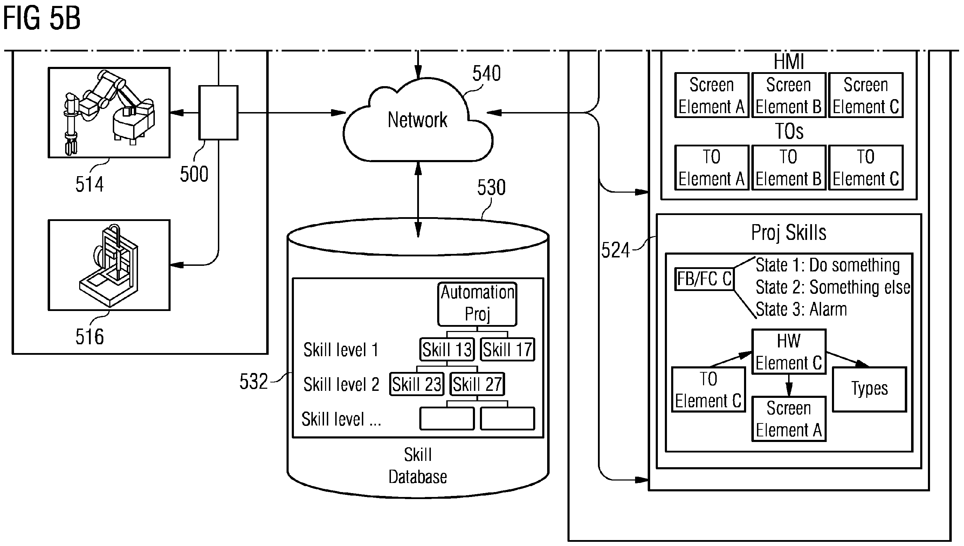

Fig. 5 illustrates a system 500 for engineering automation systems 512, 514 and 516 in an industrial automation environment 510, according to an embodiment of the present invention. In Fig. 5, the industrial automation environment is an industrial plant 510 including robots 512 and 514 and a 3D printer 516. The engineering system 500 may be located within the network of the industrial plant 510 and implemented in an edge computing platform. The engineering system 500 may alternatively be communicatively coupled to the industrial plant 510 via a network 540.

The engineering system 500 includes a firmware module 520 and a Graphical User Interface (GUI) 522. The firmware module 520 is a combination of a processing unit and a memory unit. In an embodiment, the firmware module 520 includes a skill generator module 502, an Integrated Development Module (IDM) 504, a skill access module 506 and industry module 508. The skill generator module (SM) 502 is configured to generate, train and retrain a skill model. The skill model is configured to generate skills 524 for the automation project 523. The IDM 504 is configured to generate an Integrated Development Environment (IDE) accessed via the GUI 522. The IDE may be associated with the automation software used to execute the automation project 523 and may also be to engineer the automation systems 512-516. The skill access module 506 is an Application Programming Interface (API) configured as an interface to a skill database 530. In an embodiment, the engineering system 500 may include the skill database 530. The industry module 508 is an API configured as an interface to a standards database 550. In an embodiment, the engineering system 500 may include the standards database 550.

The GUI 522 illustrates the IDE generated by the IDM 504. The IDE includes the automation project 523 and the skills 524. The automation project 523 includes program blocks, hardware configuration, HMI elements and technology objects. The skills 524 is visualized to the automation engineer along with intermediate artifacts illustrating states, state transitions and interaction of the components. The IDE enables the automation engineer to interactively orchestrate the skills 524 for the automation project 523. The interaction is used to reinforce the training of the skill model.

The engineering system 500 is communicatively coupled to the skill database 530 via the network 540. The skill database 530 is configured to store the skills from the training stage of the skill model. The skills 524 and skills for other automation projects are stored in the skill database 530 as clusters or hierarchies or a combination of both. In Fig. 5, the skill database 530 is configured to store the skills in a skill hierarchy 532. The skill hierarchy 532 is generated using the skill model by clustering skills according to a descending level of interaction between the skills when executing a particular automation project. The skill database 530 is generated by mapping the skills and the skill hierarchy 532 to the automation systems 512-516 and the automation project. The skill database 530 can be updated based on operation of the IDE via the GUI 522 or operation of related automation software.

The standards database 550 is generated based on industry standards relevant to the industrial plant 510. For example, OPC UA Companion Specification. In an embodiment, the standards database 550 stores call graphs and internal state-machines indicated in the industry standard. For example, in Fig. 5, the PackML state-machine 552 of an OPC UA Companion Specification for packaging skills is illustrated. Also, in Fig. 5, Module Type Package (MTP) state-machine 554 of OPC UA interface for process automation is illustrated. Based on the state-machines 552 and 554, a definition of the skills 524 is generated by the skill model. The standards database 550 enables to reuse and repurpose the state-machines 552 and 554 as they are not only similar to the automation projects performed in the industrial plant 510, but also with respect to the linking and content of software and hardware components of the automation systems 512-516. The standards database 550 enables to simplify the creation of a skill description and generation of the skills 524.

The standards database 500 may also include industry-skills determined from the state-machined 552 and 554. The skill model automatically assigns the industry-skills determined from the industry standard to the automation project 523. In an embodiment, the industry-skills determined from the industry standard are classified as standard skills in the skill database 530. The skill model fits the industry-skills to the automation project 523 based on the comparison with the plurality of automation projects. In an embodiment, the skill model fits the industry-skills by matching with the skills stored in the skill database 530.

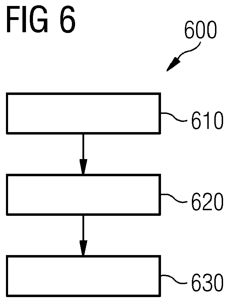

Fig. 6 illustrates a method 600 for engineering automation systems in an industrial automation environment, according to an embodiment of the present invention. The method 600 includes three main steps 610, 620 and 630. The steps 610-630 may include intermediate steps and are described as follows.

The method begins at step 610 by determining at least one intermediate artifact generated from at least one of an automation project executed by the automation software, runtime data and an industry standard associated with the industrial automation environment. The intermediate artifact may include call-graphs and/or state-machines for the automation project. Accordingly, at step 610 call-graphs and state-machines are generated from the source code of the automation project.

In an embodiment, at step 610 a skill model is trained based on a plurality of automation projects performed in the industrial automation environment. However, the training of the skill model may also be performed prior to the step 610. Accordingly, step 610 may include determining at least one of system-dependencies, component-dependencies in an autonomous system, hardware-dependencies and software-dependencies in the industrial automation environment based on source code of the plurality of automation projects and runtime data. The plurality of automation projects may include skill-based projects and/or unskilled-legacy projects. Step 610 may also include generating the skill model based the dependencies in the industrial automation environment, wherein the dependencies include the system-dependencies, the component-dependencies, the hardware-dependencies and the software-dependencies.

Further, step 610 may include generating call-graphs and state-machines from the source code of the plurality of the automation projects and determining the call-graphs and the state-machines from the industry standard. Furthermore, step 610 may include analyzing the plurality of automation projects based on the call-graphs and the state-machines to determine the system-dependencies, the component-dependencies, the hardware-dependencies and the software-dependencies.

The skills determined in the training stage of the present invention may be stored in clusters. Accordingly, step 610 may include generating a skill clusters by integrating the skills in according to a descending level of interaction between the skills to execute the plurality of automation projects. In addition, step 610 may include generating a skill database by mapping the skills and the skill cluster to the automation systems and the plurality automation projects and updating the skill database based on operation of the automation software.

Step 620 includes determining skills for the automation project based on the intermediate artifact using the skill model generated based on one or more dependencies in the industrial automation environment. The dependencies are determined from the plurality of automation projects executed by the automation software. Step 620 may also include comparing at least one of the call-graphs and the state-machines for the automation project with the call-graphs and the state-machines for the plurality of automation projects using the skill model and the skill database. Step 620 may further include determining of common attributes based on similarity matching of the intermediate artifacts with the call-graphs and the state-machines for the plurality of automation projects. The skills for the automation project may then be determined based on the comparison.

Step 620 may include automatically assigning the industry-skills determined from the industry standard to the automation project. In an embodiment, step 620 further includes fitting the industry-skills to the automation project based on the comparison with the plurality of automation projects.
In some embodiment, step 620 may also include displaying the intermediate artifacts to enable an automation engineer to validate the determined intermediate artifacts associated with the automation project. Accordingly, step 620 may include updating the skill model based on the validation from the automation engineer, wherein the skill model comprises a similarity matching algorithm configured to cause a processing unit to determine the common attributes.

Step 630 includes enabling engineering of the automation systems based on the skills determined for the automation project. Engineering the automation systems includes commissioning of automation systems, reconfiguring the automation systems, modifying operating parameters of the automation systems. Step 630 may include displaying the skills determined for the automation project to facilitate the automation engineer to engineer and/or orchestrate the skills for the automation systems based on the displayed skills.

In an embodiment, step 630 may include integrating the skills and the skill cluster in at least one automation layer of the industrial automation environment based on an automation level. The automation level includes one of field level, control level, supervisory level, planning level, enterprise level and an inter-enterprise cloud level.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art. Additionally, while the current disclosure describes the configuration tool 110 as an independent component, the configuration tool may be a software component and may be realized within a distributed control system or an engineering software suite. Additionally, in an embodiment, one or more parts of the engineering module may be realized within the technical system.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to system/device claims.

## Claims

1. A method for engineering automation systems (512-516) in an industrial automation environment (510), wherein the automation systems (512-516) are engineered using at least one automation software, the method comprising:
determining at least one intermediate artifact (300) generated from at least one of an automation project (402, 523) executed by the automation software, runtime data and an industry standard associated with the industrial automation environment (510);
determining skills for the automation project (402, 523) based on the intermediate artifact (300) using a skill model generated based on one or more dependencies in the industrial automation environment (510), wherein the dependencies are determined from a plurality of automation projects executed by the at least one automation software; and
enabling engineering of the automation systems (512-516) based on the skills (450, 524) determined for the automation project (402, 523).

2. The method according to claim 1, further comprising:
determining at least one of system-dependencies, component-dependencies in an autonomous system, hardware-dependencies and software-dependencies in the industrial automation environment (510) based on source code of the plurality of automation projects and runtime data, wherein the plurality of automation projects comprises at least one of a skill-based project and an unskilled-legacy project; and
generating the skill model based the dependencies in the industrial automation environment (510), wherein the dependencies include the system-dependencies, the component-dependencies, the hardware-dependencies and the software-dependencies.

3. The method according to claim 2, further comprising:
generating at least one of call-graphs and state-machines from the source code of the plurality of the automation projects;
determining the call-graphs and the state-machines from the industry standard; and
analyzing the plurality of automation projects based on the call-graphs and the state-machines to determine the system-dependencies, the component-dependencies, the hardware-dependencies and the software-dependencies.

4. The method according to one of the preceding claims, further comprising:
generating a skill clusters (422-426, 532) by integrating the skills in according to a descending level of interaction between the skills to execute the plurality of automation projects.

5. The method according to one of the preceding claims, further comprising:
generating a skill database (420, 530) by mapping the skills and the skill cluster to the automation systems (512-516) and the plurality automation projects; and
updating the skill database (420, 530) based on operation of the automation software.

6. The method according to one of the preceding claims, particularly claim 1, wherein the intermediate artifact (300) comprises at least one of the call-graphs, the state-machines for the automation project (402, 523), the method further comprises:
comparing at least one of the call-graphs and the state-machines for the automation project (402, 523) with the call-graphs and the state-machines for the plurality of automation projects using the skill model and the skill database (420, 530), wherein comparing comprises determining of common attributes based on similarity matching of the intermediate artifacts with the call-graphs and the state-machines for the plurality of automation projects; and
determining the skills for the automation project (402, 523) based on the comparison.

7. The method according to one of the preceding claims, further comprising:
displaying the intermediate artifact (300) to enable an automation engineer to validate the determined intermediate artifact (300) associated with the automation project (402, 523); and
updating the skill model based on the validation from the automation engineer, wherein the skill model comprises a similarity matching algorithm configured to cause a processing unit to determine the common attributes.

8. The method according to one of the preceding claims, further comprising:
automatically assigning the industry-skills determined from the industry standard to the automation project (402, 523), wherein automatically assigning comprises fitting the industry-skills to the automation project (402, 523) based on the comparison with the plurality of automation projects.

9. The method according to one of the preceding claims, further comprising:
displaying the skills determined for the automation project (402, 523) to facilitate the automation engineer to engineer and/or orchestrate the skills for the automation systems (512-516) based on the displayed skills.

10. The method according to one of the preceding claims, further comprising:
integrating the skills and the skill cluster in at least one automation layer of the industrial automation environment (510) based on an automation level, wherein the automation level includes one of field level, control level, supervisory level, planning level, enterprise level and an inter-enterprise cloud level.

11. An integrated development module (504) of an automation software to engineer automation systems (512-516) in an industrial automation environment (510), the integrated development module (504) configured to cause a processing unit to execute at least one of the steps according to method claims 1-10.

12. The integrated development module (504) according to claim 11, where the integrated development module (504) is hosted on at least one of an engineering system (500), an edge computing platform (500) in the industrial automation environment (510) and a cloud computing platform.

13. The integrated development module (504) according to one of claim 11 and claim 12, wherein the integrated development module (504) is configured to generate an Integrated Development Environment (IDE), wherein the IDE is accessed by a Graphical User Interface (GUI) (522) of the engineering system (500).

14. A computer program product, comprising computer readable code, that when executed on a processor, performs any one of the method steps of one or more of the method claims 1 to 10.
